Europäisches Patentamt

European Patent Office

Office européen des brevets

(11) Publication number: **0 281 293 B1**

# EUROPEAN PATENT SPECIFICATION

(45) Date of publication of patent specification: **06.05.92**

(51) Int. Cl.⁵: **B64D 11/00**

(21) Application number: **88301450.8**

(22) Date of filing: **19.02.88**

(54) **Passenger service system for vehicles.**

(30) Priority: **25.02.87 JP 42304/87**

(43) Date of publication of application:
**07.09.88 Bulletin 88/36**

(45) Publication of the grant of the patent:
**06.05.92 Bulletin 92/19**

(84) Designated Contracting States:
**AT DE ES FR GB IT NL**

(56) References cited:
**EP-A- 0 230 280**
**GB-A- 2 158 610**
**US-A- 4 584 603**
**US-A- 4 630 821**
**US-A- 4 684 981**

(73) Proprietor: **SONY CORPORATION**
**7-35 Kitashinagawa 6-Chome Shinagawa-ku Tokyo 141(JP)**

(72) Inventor: **Ichise, Atsushi c/o Patents Division Sony Corporation 7-35 Kitashinagawa Shinagawa-ku Tokyo 141(JP)**
Inventor: **Kondo, Yoshiyuki c/o Patents Division Sony Corporation 7-35 Kitashinagawa Shinagawa-ku Tokyo 141(JP)**
Inventor: **Hirayasu, Masatoshi c/o Patents Division Sony Corporation 7-35 Kitashinagawa Shinagawa-ku Tokyo 141(JP)**
Inventor: **Inoue, Kenji c/o Patents Division Sony Corporation 7-35 Kitashinagawa Shinagawa-ku Tokyo 141(JP)**

(74) Representative: **Pilch, Adam John Michael et al
D. YOUNG & CO. 10 Staple Inn
London WC1V 7RD(GB)**

## Description

This invention relates to passenger service systems for vehicles.

In passenger vehicles such as aircraft, it is usual for attendants to serve the respective passengers, such as by responding to their requests for meals, drinks, or souvenirs.

In conventional passenger vehicles, however, each attendant visits passengers sequentially to receive and respond to the respective requests, so that a menu of available items is not simultaneously available to all the passengers for simultaneous selection by all the passengers. Also, when a passenger makes a request, the attendant must visit that passenger's seat to answer the request.

It has been proposed in US Patent No. US-A-4 584 603 to provide an amusement and information system for aircraft in which an entertainment terminal is mounted on each seat back, the terminal including a keyboard and video display. The keyboard can be used to provide access to video games and films, as well as flight path and crew information. A flight attendant video panel provides an indication of passengers requiring assistance by displaying the seat numbers of passengers who have activated a flight attendant key.

European Patent Application No. EP-A-0 230 280 discloses an aircraft television system in which television receivers are provided as lightweight modules for removable installation on seat backs.

US Patent No. US-A-4 630 821 discloses a video game apparatus integrally formed as part of a passenger tray for use in an aircraft. Each unit is self-contained and includes its own memory storing various game programs.

According to one aspect of the present invention there is provided a passenger service system for a vehicle, the system comprising:

a head end apparatus including memory means for storing data, and display means;

a plurality of terminal units, each provided at a respective one of a plurality of passenger seats, each terminal unit having display means; and

means for transmitting said data from said head end apparatus to the terminal units;

characterised in that:

said head end apparatus stores menu data in said memory means and includes means for recovering said menu data for subsequent transmission, said menu data including at least one menu and each menu including at least one menu item;

each of said terminal units is operable to display said menu data and includes means for selecting a menu item from among the displayed menu data, and means for generating a request signal which indicates the menu item selected by said selecting means and which also includes an address signal identifying said terminal unit;

said transmitting means is operable to transmit the request signals from the terminal units to the head end apparatus; and

said head end apparatus includes controller means for receiving the request signals from the terminal units and processing the request signals for display, the display means of the head end apparatus being connected to said controller means for displaying the processed request signals received from the controller means.

In a preferred embodiment of the invention, to be described in greater detail hereinafter, an improved passenger vehicle service system, having a simplified arrangement, permits passenger attendants to provide speedy service to the passengers while also alleviating the workload of each attendant considerably. The service system also permits passengers to select menu items from their seats, and to do so freely and in an interactive manner.

The invention will now be described by way of example with reference to the accompanying drawings, throughout which like parts are referred to by like references, and in which:

Figures 1A and 1B are block circuit diagrams showing the overall arrangement of an aircraft service system according to an embodiment of the present invention;

Figure 2 is a plan view showing a selection and display apparatus included in the system of Figures 1A and 1B;

Figure 3 is a plan view of two units of the selection and display apparatus shown in Figure 2, each mounted on the rear surface of a respective passenger seat;

Figures 4A to 4C are schematic representations of menu data displayed by the preferred service system;

Figure 5 is a schematic diagram of a preferred structure for menu data transmitted by the service system;

Figures 6A to 6C and 7A to 7D are diagrams showing signal formats used in the preferred service system; and

Figure 8 is a perspective view of the interior of an aircraft equipped with the preferred embodiment of the invention.

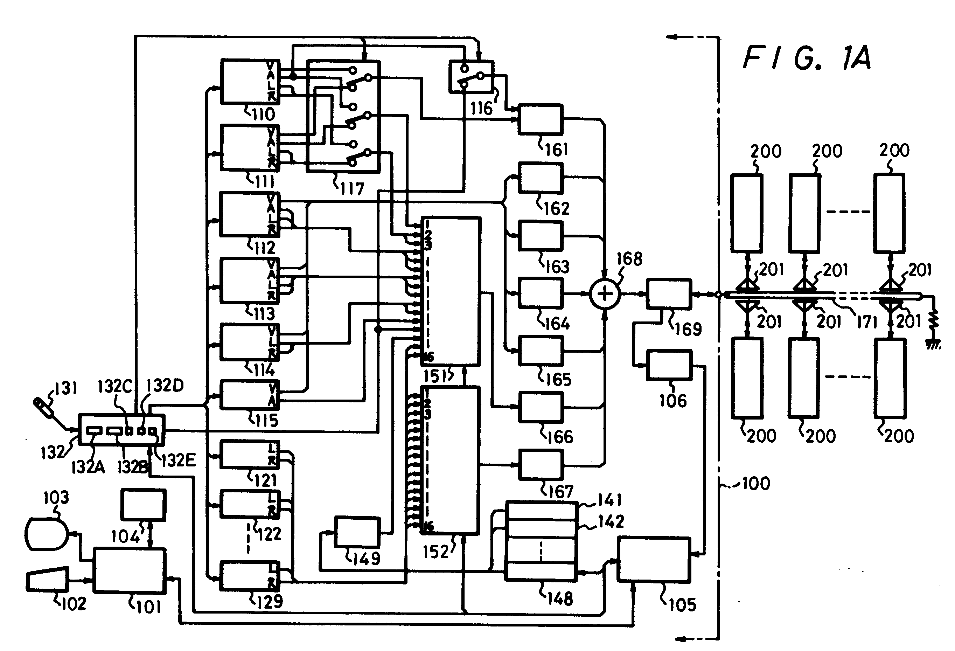

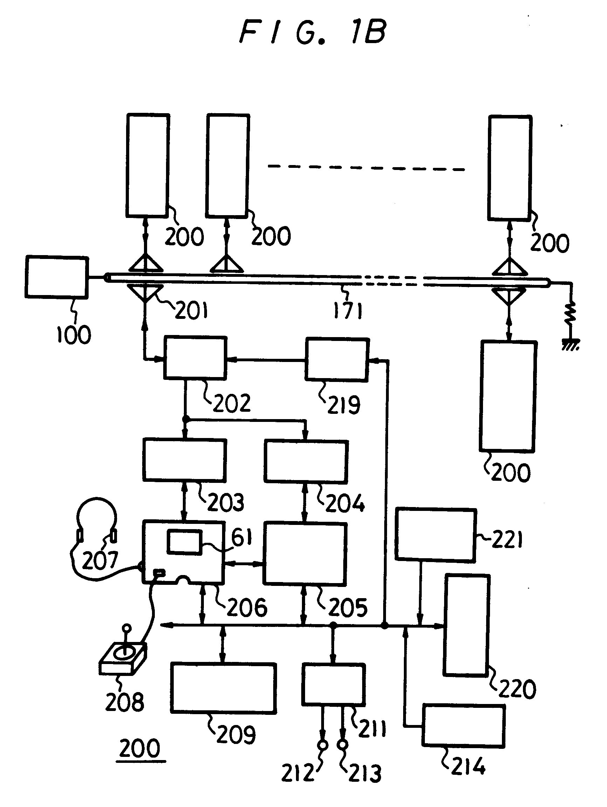

Referring to Figures 1A and 1B, a transmitter 100 is provided in a crew's compartment or the like in an aircraft, and terminal units 200 each serve a different one of the aircraft passenger seats. The embodiment of Figures 1A and 1B includes a frequency-division multiplex system including seven "down" channels for transmitting signals from the transmitter 100 to the terminal units 200 and two "up" channels for transmitting signals from the terminal units 200 to the transmitter 100. The down channels are used to transmit a variety of information signals, control signals and polling signals. The up channels are used both to transmit data generated by the passengers at arbitrary times from the terminal units 200, and data generated in response to polling signals from the transmitter 100.

In the transmitter 100, video tape recorders (VTRs) 110 to 113 are provided, each of which may be an 8 mm VTR, for example. The VTR 110 is used for an override operation and is loaded with a cassette tape explaining, for example, how to put on a life-jacket. Each of the other VTRs 111, 112 and 113 is loaded with a cassette tape of a video programme such as a film.

Each of the VTRs 111, 112 and 113 is provided with a terminal V for supplying a reproduced video signal and with terminals L, R and A for supplying reproduced audio signals.

The VTRs 110 to 113 supply video signals V, stereo audio signals L and R in a first language, and monaural audio signals A in a second language.

The transmitter 100 also includes a television tuner 114, a still image reproducer 115 such as a CD-ROM (compact disc read only memory) player, which is loaded with a compact disc on which airport maps, various procedures, and other information may be recorded. Each of the units 114 and 115 supplies video signals V, unit 114 supplies audio signals L, R and unit 115 supplies audio signal A.

The transmitter 100 further includes CD players 121 to 129 which supply stereo audio signals L, R which may be music signals, for example.

The Figure 1A system includes a microphone 131 for making announcements from within the cabin, an audio-visual (AV) control unit 132, an announce switch 132A, an override switch 132B, and pause switches 132C to 132E for commanding the VTRs 111 to 113 to pause.

The Figure 1A system also includes memory units 141 to 147 (each of which may be, for example, a ROM cartridge for use in a conventional personal computer such as an MSX standard personal computer) in which software programs such as games or the like may be written, and a random access memory (RAM) cartridge 148 in which may be stored programs and data such as a menu or the like indicating services available in the cabin. The programs and data from the cartridges 141 to 148 are time-division-multiplexed by a multiplexer 149 for transmission as a serial signal to a CADA (cable digital audio/data transmission) encoder 151, as will be described later. A further CADA encoder 152 is also provided.

The CADA encoders 151 and 152 are of the type described in US Patent No. US-A-4 684 981. Each of the CADA encoders 151 and 152 pulse code modulates ("PCM-codes") and time-division-multiplexes 16-channel monaural audio signals ( or 8-channel stereo audio signals) and a command signal (to be described below) for controlling one or more of the terminal units 200. The multiplexed signals generated in each of the CADA encoders 151 and 152 have substantially the same bandwidth as that of the ordinary video signal. The format of the PCM signals generated in the CADA encoders 151 and 152 will be described later.

The Figure 1A system also includes modulators 162 to 167 each of which preferably includes an amplitude modulator of the type that produces vestigial sideband (VSB) signals, a duplexer 169 which separates signals in the down channels and those in the up channels, and a controller 105 preferably comprising a microcomputer for controlling the above-mentioned respective circuits and the terminal units 200. The controller 105 is supplied with commands, data, and other signals from the terminal units 200 through the duplexer 169 and a demodulator 106.

A master control unit 101 comprises a microcomputer for centrally controlling and monitoring operation of the overall system including the transmitter 100 and the terminal units 200. For this purpose, the master control unit 101 is connected to the controller 105, a keyboard 102 for inputting data, a cathode ray tube (CRT) display 103 for monitoring data, and an external storage unit 104, which may be a floppy disc drive or a hard disc drive (HDD).

Normally, the video signal V from the VTR 111 is supplied to the modulator 161 through a switching circuit 117. On the other hand, video signals V from the VTRs 112 to 115 are respectively supplied to the modulators 162 to 165 to be modulated in the same manner as are video signals to be broadcast in an ordinary television broadcasting system. The modulators 161 to 165 output modulated signals, of the type broadcast by ordinary television broadcast systems, each occupying a different frequency channel. These modulated signals are supplied to an adder 168.

Audio signals L, R and A from the VTR 111 are supplied to the CADA encoder 151 through the switching circuit 117. Audio signals L, R and A from the VTRs 112, 113, the units 114, 115 and the compact disc players 121 to 129 and output signals from the multiplexer 149 are supplied to the encoders 151 and 152 wherein these signals are converted into two time-division-multiplexed signals. These time-division-multiplexed signals are respectively supplied to the modulators 166 and 167 to be modulated, so that modulated signals occupying vacant channels (i.e., channels other than those occupied by the modulated signals produced in the modulators 161 to 165) emerge from the modulators 166 and 167. The modulated signals from the modulators 166 and 167 are then supplied to the adder 168.

The adder 168 then frequency-multiplexes the modulated signals from the modulators 161 to 167 and outputs the resulting multiplexed signals.

This multiplexed signal is delivered through the duplexer 169 to a leaky cable 171 as a signal for the down channels. The cable 171 is preferably a coaxial cable having a spirally indented periphery so as to leak transmitted signals.

The cable 171 is thus usually supplied with frequency-multiplexed video signals V from the VTRs 11 to 113 and the units 114, 115 as well as encoded audio signals L, R and A reproduced from the VTRs 111 to 113, the units 114, 115 and the CD players 121 to 129, and programs and data from the cartridge 141 to 148 which are time-division-multiplexed before they are frequency-multiplexed.

To make an announcement in the cabin, the announce switch 132A is turned on. Actuation of the switch 132A automatically generates a control signal for placing the VTRs 111 to 113, the units 114, 115 and the CD players 121 to 129 into a pause mode, muting the circuits for reproducing their signals, and setting a switching circuit 116 into the state shown in Figure 1A so that a voice signal from the microphone 131 is supplied from the AV control unit 132 through the switching circuit 116 to the modulator 161 to be modulated to an FM signal similar to the audio signal component of an ordinary broadcast television signal. This FM signal is supplied to the adder 168.

In this event, the voice signal from the microphone 131 is also supplied from the AV control unit 132 to the encoder 151, and the controller 105 supplies the encoders 151 and 152 with a command signal indicative of an announce mode on the basis of a signal supplied from the AV control unit 132 which is indicative of actuation of the announce switch 132A.

When an announcement is made in the cabin, a voice signal representative of the announcement is added to the signals normally supplied to the adder 168 and a commond signal indicative of the announce mode is delivered by the modulator 161 and the encoder 151.

When the announce switch 132A is turned off, the system is returned to the normal operating mode described above.

When the override switch 132B is turned on to effect an override operation, the VTRs 111 to 113, the units 114, 115 and the CD players 121 to 129 are set into a pause state and the VTR 110 is set into a reproducing state by a control signal from the AV control unit 132, and the switching circuits 116 and 117 are set into a state opposite the state shown in Figure 1A by a control signal from the AV control unit 132 to that the reproduced signals V, L, R and A from the VTR 110 are supplied to the modulator 162 and the encoder 151.

In this event, the controller 105 supplies the encoders 151 and 152 with a command signal indicative of an override mode in response to a signal supplied from the AV control unit 132 which is indicative of actuation of the override switch 132B.

Thus, when an override operation is effected, the reproduced signals V, L, R and A from the VTR 110 are transmitted in place of those signals from the VTR 111 which are transmitted during the system's normal operating mode, and a command signal indicative of override mode is also transmitted.

When the announce switch 132A is turned on during an override operation, the switching circuit 116 and the encoders 151 and 152 are controlled in such a manner that the voice signal from the microphone 131 overrides the other signals, such as the audio signals L, R and A from the VTR 110.

A terminal unit 200 is provided for each passenger seat, and the cable 171 is arranged adjacent the passenger seats.

In the terminal unit 200 shown in more detail in Figure 1B, a transmitting and receiving antenna (or "coupler") 201 is arranged in the vicinity of the cable 171 so as to couple inductively with the cable 171 for transmitting and receiving signals to and from the transmitter 100 and the terminal unit 200.

A tuner 203, connected to the antenna 201 via a duplexer 202, selects any desired one of the modulated signals from the modulators 162 to 165 and demodulates the original video signal V (and the audio signal A) from the selected modulated signal. A tuner 204 selects either desired one of the modulated signals from modulators 166 and 167, and demodulates the original time-division-multiplexed signal (that is, the time-division-multiplexed signal from either of the encoders 151, 152) from the selected modulated signal.

A CADA decoder 205 performs the inverse operations to the operations performed in the encoders 151 and 152. A selection indicating apparatus 206 preferably has a colour display 61, and a variety of operational switches and connectors to which headphones 207 and a joy stick can be connected.

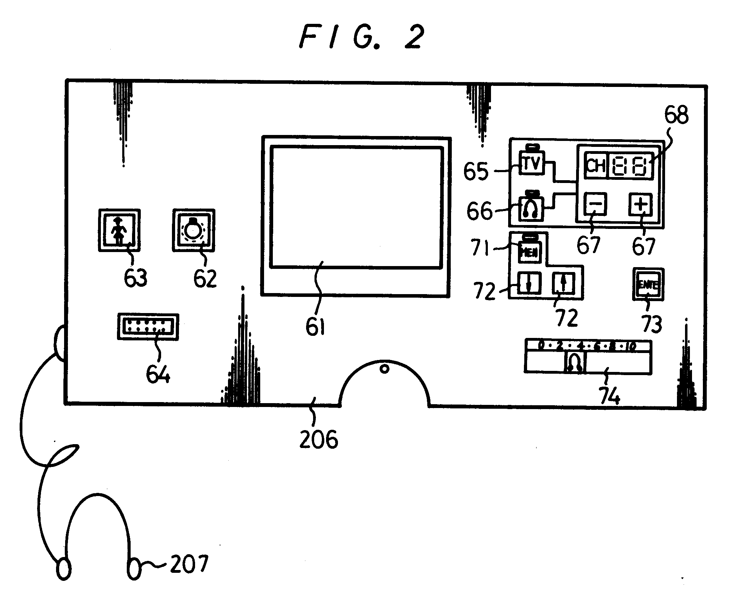

A personal computer 209, which may be a personal computer of, for example, the MSX standard, performs display processing for the colour display 61. Each terminal unit 200 of the Figure 1B system also includes a passenger service unit (PSU) 211, a reading light 212, an attendant call light 213, a sensor 214 for detecting passenger conditions, such as whether a passenger is sitting on a particular seat, whether the seat belt at each is correctly fastened, or the like, a transmitter 219 for the up channels, a microcomputer 220 for controlling the complete terminal unit 200, and an address generator 221 for generating the address of the terminal unit 200 at which the address generator is located. Each PSU 211 also includes a switch unit (not shown in Figure 2B) for controlling each of the lights 212 and 213.

Figure 2 shows a preferred embodiment of the selection indicating apparatus 206 of the Figure 1B system. The colour display 61 may be, for example, an index-beam type flat television picture tube (CRT). The selection indicating apparatus 206 also includes a reading light switch 62, an attendant call switch 63, and a connector 64 to which the joy stick 208 (shown in Figure 1B) may be connected.

A television switch 65 selects the reproduced signals V, L, R and A from the VTRs 111 to 113 or the units 114, 115, a music switch 66 selects the reproduced signals L, R from the CD players 121 to 129, channel up and down switches 67 select desired ones of the reproduced signals (channels) selected by the switch 65 or the switch 66, and an indicator 68 digitally indicates a channel number corresponding to a channel selected by the switches 67.

A menu switch 71 displays a menu on the display 61, cursor keys (switches) 72 move a cursor up and down on the display 61, an enter key 73 validates an item specified by the cursor, and a sliding adjuster 74 adjusts the sound volume of the headphones 207.

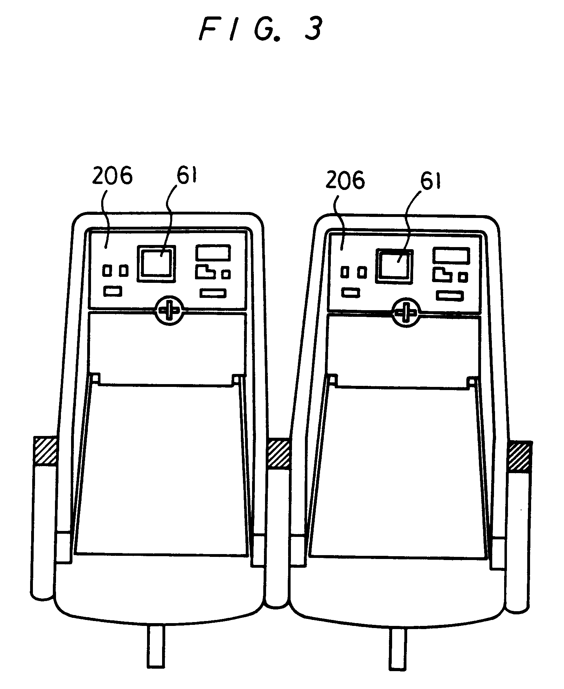

Each selection indicating apparatus 206 is preferably installed on the back of a passenger seat in front of the passenger using such apparatus, for example as shown in Figure 3.

In the system's normal operating mode, the frequency-multiplexed signal delivered to the cable 171 is picked up by the antenna 201 and supplied to the tuners 203 and 204 through the duplexer 202.

When the switch 65 is pressed, the terminal unit 200 is set into a television mode. Next the channel up/down switches 67 are pressed to select one of the output signals from the modulators 161 to 165, that is, one of the reproduced signals V from the VTRs 111 to 113 or the units 114, 115. The act of pressing the switches 67 causes the tuner 203 to supply the selected signal V to the display 61. At the same time, one of the output signals from the modulators 166 and 167 is selected in the tuner 204 and the output signal from the appropriate one of the encoders 151 and 152 is supplied to the decoder 205 wherein the audio signals L, R and A of the channel selected by the switches 67 are decoded and supplied through the selection indicating apparatus 206 to the headphones 207.

Thus, by repeatedly operating the switches 65 and 67, the passenger can select a desired one from the signals reproduced from the VTRs 111 to 113 or the units 114, 115.

When the switch 66 is pressed, the terminal unit 200 is set into a music mode. After the switch 66 has been pressed, one of the output signals from the modulators 166 and 167 is selected in the tuner 204 by pressing the switches 67 and the output signal from the appropriate one of the encoders 151 and 152 is supplied to the decoder 205 wherein audio signals L, R and A of the channel selected by the switches 67 (that is, the output of the one of the CD players 121 to 129 selected by the switches 67) are decoded, and the signals L, R are supplied through the apparatus 206 to the headphones 207.

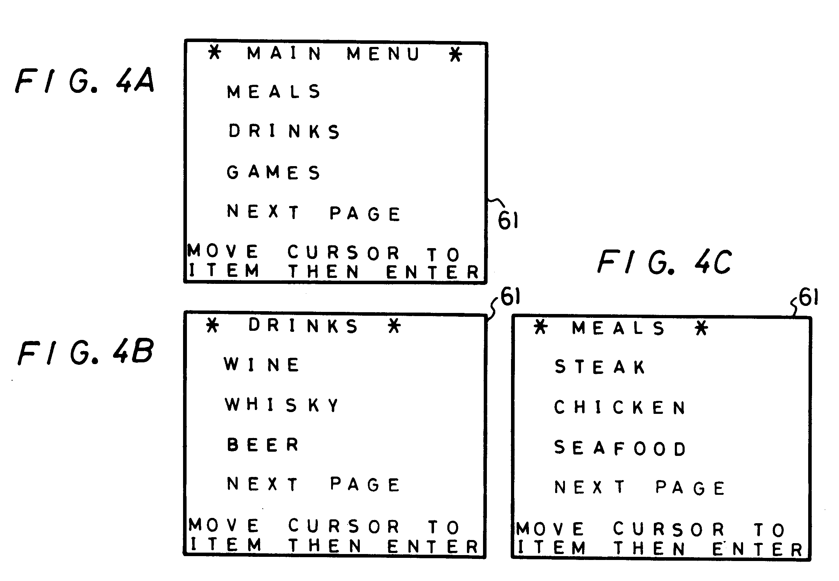

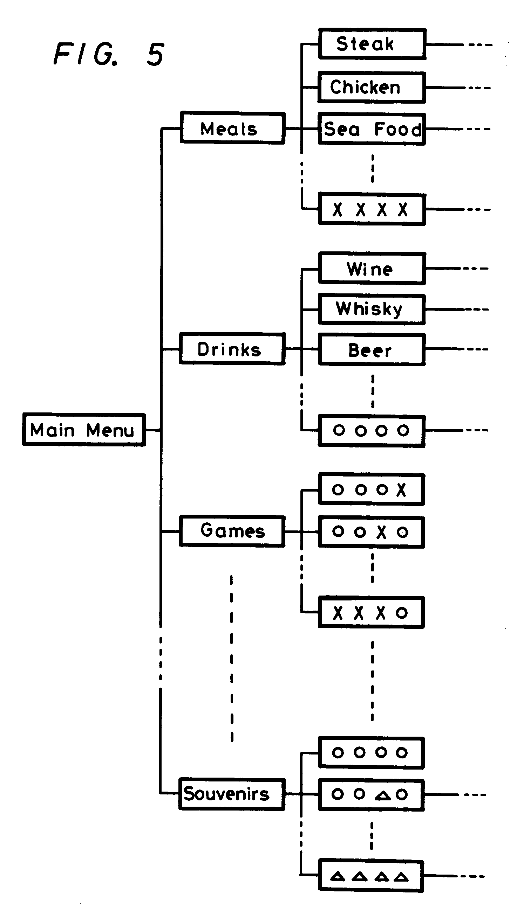

If the menu switch 71 is actuated, the decoder 205 decodes menu data stored in the memory cartridge 148, the menu data is loaded into the personal computer 209, and the personal computer 209 executes the menu data. As a result, a menu picture, such as that shown in Figure 4A, for example, is displayed on the colour display 61. The menu picture represents a menu comprising the menu data. The menu data preferably is formed so as to have a tree structure as shown in Figure 5, wherein the first menu (identified as the "main menu" in Figure 5) may have the appearance of the menu picture shown in Figure 4A when displayed. When the keys 72 are operated to move the cursor on to a desired menu item, for example the item identified as "DRINKS", and then the enter key 73 is actuated, the apparatus is placed into a mode for selecting "DRINKS" so that the menu (content) corresponding to the menu item "DRINKS" is displayed on the display 61 as shown in Figure 4B. Then, if the cursor is put on to a desired menu item of the displayed menu by operating the cursor keys 72, and the enter key 73 is then operated, the menu item specified by the cursor keys 72 and the enter key 73 is selected.

Thus, if the above-mentioned operations are carried out in succession, a menu item, namely a drink, can be selected from the "DRINKS" menu.

If the menu item (a drink having specific contents in this case) is selected, data indicative of the selected menu item (drink) and the passenger seat number generated from the corresponding address generator 221 (refer to Figure 1B) are supplied together with a command signal through the up channel, namely through the personal computer 209, the transmitter 219, the duplexer 202, the antenna 201, the cable 171, the duplexer 169 and the decoder 106 to the controller 105, and are further fed to the master control unit 101, so that the unit 101 may cause the passenger seat number and the requested menu item (for example, the drink and the contents thereof) to be displayed on the display 103.

A passenger attendant may prepare each drink displayed on the display 103 and deliver the drinks to the appropriate ones of the passenger seats indicated on the display 103.

If a predetermined input is entered by the keyboard 102 (for example, when a meal is ready to be served), in accordance with this key input the master control unit 101 supplies a corresponding command to the controller 105, and the controller 105 supplies a command signal based on this command to the CADA encoders 151 and 152 for encoding therein. The encoded command signal is transmitted via the down channel.

After transmission, the encoded command signal is extracted by the decoder 205 and, on the basis of the command signal, the decoder 205 outputs menu data (which is typically a program stored in the memory cartridge 148). This menu data is supplied to the personal computer 209, in which it is used by the computer to display a meal menu (such as the meal menu shown in Figure 4C, which is also listed as an item on the main menu shown in Figure 4A) on the display 61.

The meal menu is also preferably formed so as to have a tree structure of the type mentioned above, so that the passenger can sequentially select a desired item from the meal by operating the cursor keys 72 and the enter key 73. Thus, when the passenger finally selects the desired menu items from the meal menu, a request signal indicating the selected menu item is supplied through the up channel to the display 103, and hence, the display 103 displays in summary form the orders of respective passengers and the numbers of the passengers who have selected each menu item.

This display permits the attendants to prepare the requested meals and deliver them to the appropriate respective passenger seats in accordance with the displayed data.

The contents of the display, or the program and data stored in the memory cartridge 148 can be rewritten by the master control unit 101 through the master controller 105.

If the menu item labelled "GAMES" is selected from the initial menu picture (shown in Figure 4A), the "GAMES" menu is displayed. The "GAMES" menu includes a list of television game names (not shown).

Accordingly, if the cursor is positioned on a desired game name by operating the cursor keys 72, and if the enter key 73 is then actuated, the television game software specified by the cursor, that is, the selected game software from the memory cartridges 141 to 147 is loaded from the decoder 205 into the personal computer 209. Thereafter, the user can play the television game loaded in the personal computer 209, such as by using the joy stick 208.

As described above, the passengers can freely select and utilise signals from the VTRs 111 to 113, the units 114, 115, the CD players 121 to 129 and the game programs from the cartridges 141 to 147 in the system's normal operation mode.

A signal including data indicative of software usage at each terminal unit 200 is sent automatically from the microcomputer 220 to the transmitter 219 to be transmitted over the up channel. Each such signal is then supplied through the duplexer 202, the antenna 201, the cable 171, and the duplexer 169 to the decoder 106 wherein the original software usage data is decoded. The data thus decoded is supplied through the controller 105 to the master control unit 101 for use in monitoring and managing the software usage at each seat.

When the announce mode is effected, a command signal indicative of the announce mode is delivered through the down channel to each of the terminal units 200. The command signal is decoded in each decoder 205. The decoder 205 is forced by the command signal to select the channel through which the announce voice signal is transmitted from the microphone 131 through the encoder 151 to the terminal units 200. This voice signal is supplied to the headphones 207. During an announce operation, the volume of the signal at the headphones 207 may be controlled so as to be unaffected by the position of the volume sliding adjuster 74.

If the encoder 151, the encoder 152, or the decoder 205, is disabled due to a malfunction or the like, the announce audio signal A from the modulator 161 is automatically selected.

Also during the announce mode, a video signal V representative of an image corresponding to the announcement may be extracted from the CD-ROM reproducer 115 and forcedly received by the tuner 203. Then, the video signal V is supplied to the display 61 to display a still image corresponding to the announcement.

When an announce operation is terminated, each terminal unit 200 is returned to the state it was in before the announce mode, in response to receipt of a command signal indicating termination of the announce operation.

When an overrride operation is effected, the signals V, L, R and A from the VTR 110 are forcedly selected by a command signal indicative of the override operation, in the same manner as for the announce operation. The signal V is supplied to the display 61 and the signals L, R and A to the headphones 207.

Further, when the reading light switch 62 is pressed, the microcomputer 220 generates a request signal which indicates the number of the seat at which the reading light switch 62 has been pressed. An address from the address generator 221 is added to the request signal and the request signal (with address) is transmitted to the controller 105 through the up channel. The controller 105 generates a command signal (including the seat number) for lighting the reading light 212 corresponding to the seat number on the basis of the request signal transmitted thereto. The command signal for lighting the reading light 212 is transmitted through the down channel to the terminal units 200. The decoder 205 of the terminal unit at which the reading light switch 62 has been pressed detects the coincidence between its seat number and the seat number included in the commond signal for lighting the reading light 212 and decodes the command signal. The decoded command signal is then supplied to the PSU 211 to control a switch therein to turn on the reading light 212.

At this time, the controller 105 supplies the master control unit 101 with data indicating that the reading light switch 62 has been pressed and with data indicative of the seat number of the corresponding seat so that the master control unit 101 may collect and process information regarding which of the reading lights 212 have been lighted and which have been extinguished. This information may be displayed on the display 103 so that the crew can quickly confirm at which seats the reading lights 212 are lit.

A request signal for extinguishing a desired one of the reading lights 212 is generated by pressing the reading light switch 62 again. The process for extinguishing the reading light 212 is the same as that described above for turning on the reading light 212.

If a request signal for turning on or off a certain reading light 212 is entered using the keyboard 102 and supplied from the keyboard 102 to the controller 105, a command signal is generated in the controller 105. This command signal, which includes a command to turn on or off the reading light 212 and the corresponding seat number, is supplied through the down channel to the corresponding terminal unit 200, and the appropriate reading light 212 is turned on or off in response to the signal. Accordingly, a reading light or the like at each seat can be controlled from the master control unit 101.

Also, when the attendant call switch 63 is pressed, the call light 213 is lit, and the attendant call requests are processed by the controller 105 and the master control unit 101 and displayed on the display 103 in the same manner as when the reading light switch 62 is pressed to turn the reading light 212 on or off.

Therefore, the crew can quickly determine by examining the display 103 each seat at which the attendant call switch 63 has been pressed without going to the passenger cabin.

Moreover, the seat condition detected by each sensor 214 is also transmitted to the controller 105 with the corresponding seat number for forwarding to the control unit 101 for processing.

As described above, when a passenger or attendant inputs appropriate data by operating keys provided at one of the terminal units 200 or at the head end apparatus or transmitter 100, a menu is displayed on the display 61 at one or more passenger seats. Then, if a passenger selects a menu item comprising part of the displayed menu (by operating the "enter" key), a request signal indicating the selected menu item is supplied to the master control unit 101 so that the attendant can immediately know which item the passenger has requested, thus enabling speedy service to be provided by the attendant. Further, since the attendant does not need to visit the passenger seats to find out the requests of the passengers, the system reduces the amount of work that must be performed by the attendants.

Each passenger, while seated on a passenger seat, can freely select from a variety of menu items. Since such menu items (comprising the menu data) are displayed on the display 61 associated with each passenger's seat, the items are easy to see. If the menu data to be displayed has a tree structure as described above, desired menu items can easily be selected in an interactive way.

Further, in the preferred embodiment in which the service system is combined with an audio/video system to form one combined system, the combined system is simpler, and may more easily be extended or developed than if the two systems were to be provided separately.

Furthermore, since passenger conditions and requests are controlled and monitored from the head end apparatus, the system facilitates efficient provision of various services, such as the provision of software and a variety of meals, to the passengers from the head end apparatus or transmitter 100.

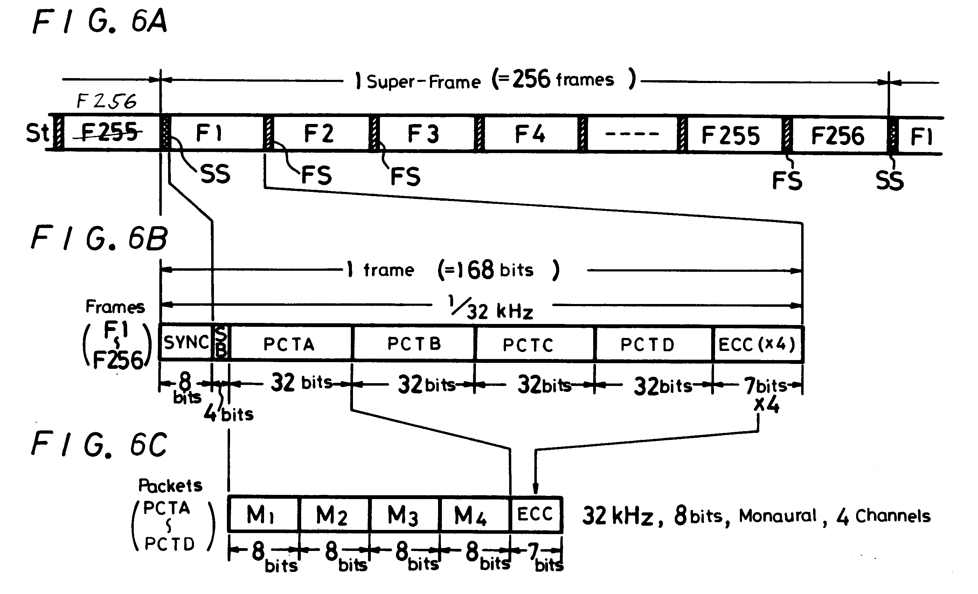

Next, the signal format of the time-division-multiplexed signals supplied by the encoders 151 and 152 will be explained with reference to Figures 6A to 6C. The signal format is an improvement of that disclosed in the aforementioned US Patent No. US-A-4 684 981.

A multiplexed signal St shown in Figure 6A is a serial binary signal formed of a number of super-frames. One super-frame thereof is formed of 256 frames F1 to F256. As shown in Figure 6B, each frame includes 168 bits and the cyclic period of one frame is $(32 \text{ kHz})^{-1}$. Each frame has an 8 bit synchronising code SYNC, followed by a 4-bit service bis SB, followed by four 32-bit data packets PCTA to PCTD, followed by four 7-bit error correcting codes (ECCs).

There are two kinds of synchronising code SYNC as shown in Figure 6A; a super-frame-sync SS for the frame F1 at the head of the super-frame and a frame-sync FS for the subsequent 255 frames F2 to F256. The bit patterns of the super-frame-sync SS and the frame-sync FS are selected to differ from each other.

The service bits SB, the details of which will be provided below, are grouped into four groups each including 77 bits. Each service bit contains data such as a command, a seat number, and the like.

Each of the data packets PCTA to PCTD is formed of 32 bits and is independent of the others. As shown in Figure 6C, each of the packets PCTA to PCTD is divided into four channels M1 to M4, each being formed of 8 bits. Each of the channels M1 to M4 contains a PCM signal obtained by sampling the audio signals L, R and A at a frequency of 32 kHz.

Since one frame contains four packets PCTA to PCTD and each packet has four channels M1 to M4, 16-channel audio signals can be simultaneously transmitted in time-division multiplexed form by the use of one signal St. Each channel is sampled at a sampling frequency of 32 kHz and encoded in 8 bits, so that it complies with the PCM audio standard of an 8 mm VTR.

Data signals from the memory cartridges 141 to 148 are converted into a time-division multiplexed bit sequence signal by the multiplexer 149 (shown in Figure 1A.) The time-division multiplexed signal output from the multiplexer 149 is used as one channel of the 16-channel signals. The signal output from the multiplexer 149 is cyclic, so that when the last bit of data from the memory cartridges 141 to 148 is transmitted, the first bit of the data is retransmitted.

Each channel of the Figure 6C signal is formed of eight bits, and eight memory cartridges 141 to 148 are provided. Accordingly, in the channel for transmitting data from the cartridges 141 to 148, each of the first bit to the eighth bit of the channel corresponds to data from a different one of the memory cartridges 141 to 148. Therefore, the transmission rate of data from each memory cartridge is 32 kbps.

The four error correcting codes ECCs respectively correct errors which may occur in the data packets PCTA to PCTD.

Since the signal St has a format determined as described above, the bit transmission rate thereof can be calculated as follows:

168 bits x 32 kHz $\simeq$ 5.4 Mbps.

One half of the calculated value is the Nyquist frequency, so that the signal St can be transmitted in a video signal bandwidth.

As described above, each of the encoders 151 and 152 can time-division-multiplex sixteen channels of audio signals, and the time division-multiplexed signal can be frequency-multiplexed with other video signals.

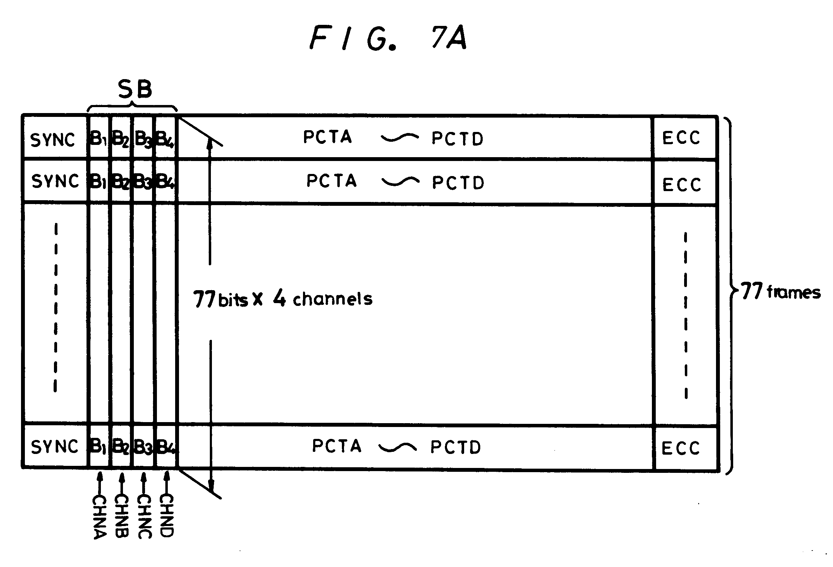

The service bits SB are preferably used in groups having a format as shown in Figures 7A to 7D. To be specific, four service bits SB are provided for every frame, and may be designated $B_1$ to $B_4$. Assuming that 77 continuous frames are vertically aligned as one group, as schematically shown in Figure 7A, the service bits SB for this group have a dimension of 77 vertical bits by 4 horizontal bits.

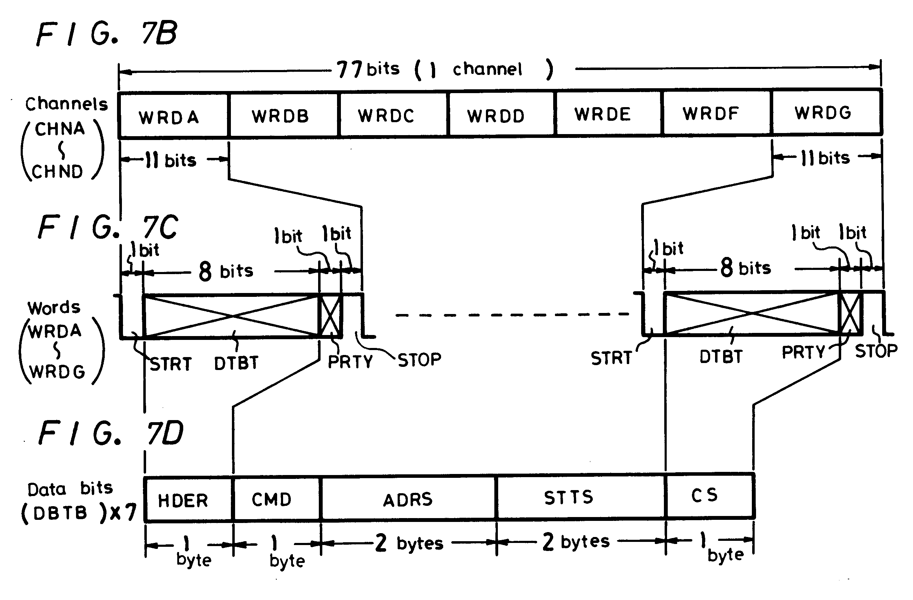

As shown in Figure 7B, the service bits SB may be vertically grouped so that each set of 77 bits is designated as one channel. A first such channel CHNA includes 77 bits $B_1$ and second to fourth such channels CHNB to CHND include bits $B_2$ s to $B_4$ s, respectively.

Each of the channels CHNA to CHND is divided into seven words WRDA to WRDG, each being formed of 11 bits as shown in Figure 7B. Each word has its first bit set to "0" level and used as a start bit STRT, the subsequent eight bits are used as data bits DTBT, the next one bit used as a parity bit PRTY, and the last one bit determined to be "0" level and used as a bit STOP, as shown in Figure 7C.

There is one data bit DTBT for each word in each of the channels CHNA to CHND, and there are seven words for each 77 frames. Therefore, there are seven data bits (seven bytes) for the 77 frames. Accordingly, there are 7 bytes x 4 channels of the data bits DTBTs in all.

As shown in Figure 7D, the second channel CHNB has its first byte set in a predetermined bit pattern ("AA" in hexadecimal) and is used as a header HDER; its second byte is used as a command CMD for identifying a maximum of 256 kinds of commands; the third and fourth bytes are used as an address ADRS indicative of a seat number (or a number identifying a particular terminal unit); the fifth and sixth bytes are used as status information STTS indicative of data or parameters incident to the command CMD; and the last byte is used as a check sum CS.

Therefore, the transmitter 100 can specify desired ones of the terminal units 200 and control the operation of each corresponding reading light 212 and attendant call light 213 by use of the data bit DTBT in the channel CHNB.

Since there is only one up channel for random data, the data bit DTBT of the first channel CHNA is used as a flag indicative of use or non-use of the up channel for the random data. The flag is set when the random data of the up channel is used. Therefore, each terminal unit 200 judges whether or not the up channel for random data can be used by assessing the data bit DTBT of the channel CHNA. If the channel is in use, the terminal unit 200 delays transmission of a command (and data) to the transmitter 100 until the channel has become vacant.

The third and fourth channels CHNC and CHND are not defined.

In the up channel, the above-mentioned service bits SB are transmitted in the formats shown in Figures 7B to 7D at a bit rate of 32 kbps, equal to that of the down channel transmission, in the phase-shift keying (PSK) signal state.

While the above-described embodiment of the invention has been described for the case that the system is installed in an aircraft, it is contemplated that the system may alternatively be implemented in any other passenger vehicle having a plurality of passenger seats, such as a bus or a train.

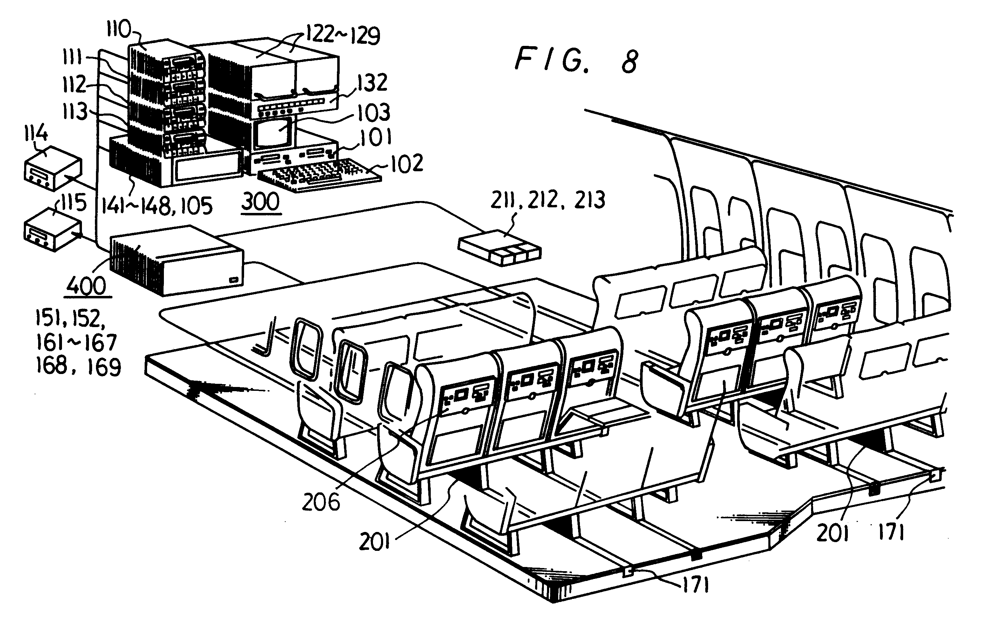

Figure 8 shows a preferred embodiment of the service system when installed in a cabin of an aircraft. The components in Figure 8 corresponding to those in Figure 1A are designated by the same reference numerals. The cartridges 141 to 148 and the controller 105 of Figure 1A are accommodated in a box 300, and the encoders 151 and 152, the modulators 161 to 167, the adder 168 and the duplexer 169 are accommodated in a box 400.

According to the service system as described above, when a passenger or attendant inputs appropriate data by operating keys provided at one of the terminal units 200 or at the head end apparatus or transmitter 100, a menu is displayed on the display 61 at one or more of the terminal units 200. Then, if a passenger selects a menu item from this display menu (for example, by pressing the enter key 73), a request signal indicating the selected menu item is transmitted to the master control unit 101 so that the attendant can promptly learn of the passenger's request, thus making it possible to carry out the requested service rapidly. Further, since the attendant does not need to visit the passenger seats to find out the requests of the passengers, the system considerably reduces the work that must be performed by the attendants.

Each passenger, while seated on a passenger seat, can freely select any of a variety of menu items. Since such menu items (comprising the menu data) are displayed on the display at each passenger's seat, the items are easy to see. If the menu data to be displayed has a tree structure as described above, desired menu items can easily be selected in an interactive way.

Further, in the preferred embodiment in which the service system is combined with an audio/video system, the combined system is simpler, and may more easily be extended than if the two systems were to be provided separately.

Furthermore, since passenger conditions and requests are controlled and monitored from the head end apparatus, the system facilitates efficient provision of a wide variety of services, such as the provision of a variety of software and a variety of meals or drinks, to the passengers from the head end apparatus.

## Claims

1. A passenger service system for a vehicle, the system comprising:

a head end apparatus (100) including memory means (141 to 148) for storing data, and display means (103);

a plurality of terminal units (200), each provided at a respective one of a plurality of passenger seats, each terminal unit (200) having display means (61); and

means (171) for transmitting said data from said head end apparatus (100) to the terminal units (200);

characterised in that:

said head end apparatus (100) stores menu data in said memory means (141 to 148) and includes means (105) for recovering said menu data for subsequent transmission, said menu data including at least one menu and each menu including at least one menu item;

each of said terminal units (200) is operable to display said menu data and includes means (206) for selecting a menu item from among the displayed menu data, and means (219) for generating a request signal which indicates the menu item selected by said selecting means (206) and which also includes an address signal identifying said terminal unit (200);

said transmitting means (171) is operable to transmit the request signals from the terminal units (200) to the head end apparatus (100); and

said head end apparatus (100) includes controller means (101) for receiving the request signals from the terminal units (200) and processing the request signals for display, the display means (103) of the head end apparatus (100) being connected to said controller means (101) for displaying the processed request signals received from the controller means (101).

2. A system according to claim 1, wherein said head end apparatus (100) comprises keyboard means (102) connected to the controller means (101) for sending a command to the controller means (101) for instructing the controller means (101) to generate a command signal for transmission to the terminal units (200), wherein the command signal is capable of causing the terminal units (200) to display menu data transmitted from the head end apparatus (100).

3. A system according to claim 1 or claim 2, wherein said head end apparatus (100) comprises encoder means (151,152) for digitally encoding said menu data, and each terminal unit (200) comprises decoder means (205) for decoding said encoded menu data.

4. A system according to claim 3, wherein said menu data includes a list of meals and a list of drinks.

5. A system according to claim 3 or claim 4, wherein said selecting means comprises a cursor up key (72) and a cursor down key (72) for selecting menu items among said displayed menu data, and an enter key (73) for sending a selection by one of said cursor up and down keys (72) to said request signal generating means (219).

6. A system according to claim 3, claim 4 or claim 5, wherein said head end apparatus (100) comprises means for storing television game software data and recovering said television game software data for transmission to the terminal units (200), wherein said menu data includes a list of television games included in said television game software data, wherein said encoder means (151,152) is capable of encoding said television game software data as well as said menu data, and wherein each terminal unit (200) comprises means (209) for processing each television game selected by the selecting means (206).

7. A system according to claim 6, wherein said menu data includes a list of meals, a list of drinks and a list of television games.

8. A system according to claim 6 or claim 7, wherein said head end apparatus (100) includes means (110 to 115) for reproducing video signals and means (121 to 129) for reproducing audio signals, wherein said audio signals are encoded by said encoder means (151,152), and wherein the head end apparatus (100) includes modulator means (161 to 167) for modulating said video signals, said encoded menu data, and said encoded audio signals, and multiplexer means (168) for multiplexing said modulated video signals, said modulated encoded menu data, and said modulated encoded audio signals, and wherein each terminal unit (200) includes means (201) for receiving said multiplexed signals, and demodulator means (203,204) for demodulating said video signals, said encoded menu data, and said encoded audio signals, and for supplying the demodulated encoded audio signals and the demodulated encoded menu data to the decoder means (205), wherein the demodulated encoded audio signals are decoded by said decoder means (205), and wherein each terminal unit (200) includes means (65 to 68) for selecting said video signals and said audio signals, and an audio output terminal for receiving the selected audio signals.

9. A system according to claim 8, wherein each terminal unit (200) comprises a game terminal (64) connected to the television game processing means (209) for receiving television game play signals and routing the television game play signals to the television game processing means (209), and a game controller (208) connectable to the game terminal (64) for generating the television game play signals.

10. A system according to claim 9, wherein each terminal unit (200) includes a panel (206) in which the menu selecting means (71 to 73), the means (65 to 68) for selecting video signals and audio signals, the audio output terminal, and the game terminal (64) are provided.

11. A system according to claim 10, wherein at least one of said panels (206) is provided on the rear side of one of said passenger seats.

12. A system according to any one of the preceding claims, wherein said transmitting means is a cable (171).

13. A system according to claim 12, wherein the same cable (171) is used for transmitting the request signals and the menu data.

14. A system according to any one of the preceding claims, wherein said passenger vehicle is an aircraft.

**Revendications**

1. Système de service pour passagers d'un véhicule, le système comprenant :

un appareil de tête (100) comportant des moyens de mémoire (141 à 148) pour stocker des données, et un moyen d'affichage (103) ;

une pluralité d'unités de terminal (200), chacune étant prévue au niveau d'un siège respectif pris parmi une pluralité de sièges de passagers, chaque unité de terminal (200) comportant un moyen d'affichage (61) ; et

un moyen (171) pour transmettre lesdites données depuis ledit appareil de tête (100) aux unités de terminal (200) ;

caractérisé en ce que :

ledit appareil de tête (100) stocke des données de menus dans lesdits moyens de mémoire (141 à 148) et comporte un moyen (105) pour restaurer lesdites données de menus pour une transmission ultérieure, lesdites données de menus comportant au moins un menu et chaque menu comportant au moins un produit de menu ;

chacune desdites unités de terminal (200) pouvant fonctionner pour afficher lesdites données de menus et comportant un moyen (206) pour sélectionner un produit de menu parmi les données de menus affichées, et un moyen (219) pour générer un signal de requête qui indique le produit de menu sélectionné par ledit moyen de sélection (206) et qui comporte également un signal d'adresse qui identifie ladite unité de terminal (200) ;

ledit moyen de transmission (171) pouvant fonctionner pour transmettre les signaux de requête depuis les unités de terminal (200) à l'appareil de tête (100) ; et

ledit appareil de tête (100) comporte un moyen de contrôleur (101) pour recevoir des signaux de requête qui proviennent des unités de terminal (200) et pour traiter les signaux de requête pour les afficher, le moyen d'affichage (103) de l'appareil de tête (100) étant connecté audit moyen de contrôleur (101) pour afficher les signaux de requête traités reçus depuis le moyen de contrôleur (101).

2. Système selon la revendication 1, dans lequel ledit appareil de tête (100) comprend un moyen de clavier (102) connecté au moyen de contrôleur (101) pour envoyer une commande au moyen de contrôleur (101) pour donner instruction au moyen de contrôleur (101) de générer un signal de commande pour la transmission aux unités de terminal (200), dans lequel le signal de commande peut forcer les unités de terminal (200) à afficher des données de menus transmises depuis l'appareil de tête (100).

3. Système selon la revendication 1 ou 2, dans lequel ledit appareil de tête (100) comprend un moyen de codeur (151, 152) pour coder numériquement lesdites données de menus, et chaque unité de terminal (200) comprend un moyen de décodeur (205) pour décoder lesdites données de menus codées.

4. Système selon la revendication 3, dans lequel lesdites données de menus comportent une liste de plats et une liste de boissons.

5. Système selon la revendication 3 ou 4, dans lequel ledit moyen de sélection comprend une touche de déplacement de curseur vers le haut (72) et une touche de déplacement de curseur vers le bas (72) pour sélectionner des produits de menus parmi lesdites données de menus affichées, et une touche entrée (73) pour envoyer une sélection effectuée au moyen desdites touches de déplacement de curseur vers le haut et vers le bas (72) auxdits moyens de génération de signal de requête (219).

6. Système selon la revendication 3, 4 ou 5, dans lequel ledit appareil de tête (100) comprend un moyen pour stocker des données de logiciels de jeux vidéo et pour restaurer lesdites données de logiciels de jeux vidéo pour une transmission aux unités de terminal (200), dans lequel lesdites données de menus comportent une liste de jeux vidéo incluse dans lesdites données de logiciels de jeux vidéo, dans lequel ledit moyen de codeur (151, 152) permet de coder lesdites données de logiciels de jeux vidéo ainsi que lesdites données de menus et dans lequel chaque unité de terminal (200) comprend un moyen (209) pour traiter chaque jeu vidéo sélectionné par le moyen de sélection (206).

7. Système selon la revendication 6, dans lequel lesdites données de menus comportent une liste de plats, une liste de boissons et une liste de jeux vidéo.

8. Système selon la revendication 6 ou 7, dans lequel ledit appareil de tête (100) comporte des moyens (110, 115) pour reproduire des signaux vidéo et des moyens (121 à 129) pour reproduire des signaux audio, dans lequel lesdits signaux audio sont codés par ledit moyen codeur (151, 152) et dans lequel l'appareil de tête (100) comporte des moyens de modulateur (161 à 167 pour moduler lesdits signaux vidéo, lesdites données de menus codées et lesdits signaux audio codés, et un moyen de multiplexeur (168) pour multiplexer lesdits signaux vidéo modulés, lesdites données de menus codées modulées et lesdits signaux audio codés modulés, et dans lequel chaque unité terminal (200) comporte un moyen (201) pour recevoir lesdits signaux multiplexés et un moyen de démodulateur (203, 204) pour démoduler lesdits signaux vidéo, lesdites données de menus codées et lesdits signaux audio codés et pour appliquer les signaux audio codés démodulés et les données de menus codées démodulées au moyen de décodeur (205), dans lequel les signaux audio codés démodulés sont décodés par ledit moyen de décodeur (205) et dans lequel chaque unité de terminal (200) comporte des moyens (65 à 68) pour sélectionner lesdits signaux vidéo et lesdits signaux audio et un terminal de sortie audio pour recevoir les signaux audio sélectionnés.

9. Système selon la revendication 8, dans lequel chaque unité de terminal (200) comprend un terminal de jeu (64) connecté au moyen de traitement de jeux vidéo (209) pour recevoir des signaux de fonctionnement de jeux vidéo et pour acheminer les signaux de fonctionnement de jeux vidéo au moyen de traitement de jeux vidéo (209) et un contrôleur de jeux (208) qui peut être connecté au terminal de jeux (64) pour générer des signaux de fonctionnement de jeux vidéo.

10. Système selon la revendication 9, dans lequel chaque unité de terminal (200) comporte un panneau (206) dans lequel les moyens de sélection de menus (71 à 73), les moyens (65 à 68) pour sélectionner des signaux vidéo et des signaux audio, le terminal de sortie audio et le terminal de jeux (64) sont prévus.

11. Système selon la revendication 10, dans lequel au moins un desdits panneaux (206) est prévu sur le côté arrière d'un desdits sièges de passagers.

12. Système selon l'une quelconque des revendication précédentes, dans lequel ledit moyen de transmission est un câble (171).

13. Système selon la revendication 12, dans lequel le même câble (171) est utilisé pour transmettre les signaux de requête et les données de menus.

14. Système selon l'une quelconque des revendications précédentes, dans lequel ledit véhicule pour passagers est un avion.

## Patentansprüche

1. Service-System für Passagiere eines Beförderungsmittels, welches System umfaßt:
   eine Hauptstellen-Einrichtung (100), die ein Speichermittel (141 bis 148) zum Speichern von Daten und ein Anzeigemittel (103) enthält,
   eine Vielzahl von Endstellen-Einheiten (200), wovon jede bei einem betreffenden einer Vielzahl von Passagiersitzen vorgesehen ist, wobei jede Endstellen-Einheit (200) ein Anzeigemittel (61) hat, und
   ein Mittel (171) zum Übertragen der Daten von der Hauptstellen-Einrichtung (100) zu den Endstellen-Einheiten (200),
   dadurch **gekennzeichnet,** daß
   die Hauptstellen-Einrichtung (100) Menü-Daten in dem Speichermittel (141 bis 148) speichert und ein Mittel (105) zum Wiedergewinnen der Menü-Daten zum nachfolgenden Übertragen enthält, wobei die Menü-Daten zumindest ein Menü enthalten und jedes Menü zumindest einen Menü-Posten enthält,
   jede der Endstellen-Einheiten (200) betreibbar ist, um die Menü-Daten anzuzeigen, und ein Mittel (206) zum Auswählen eines Menü-Postens aus den angezeigten Menü-Daten sowie ein Mittel (219) zum Erzeugen eines Anforderungsignals enthält, das den Menü-Posten angibt, der durch das Mittel (206) zum Auswählen ausgewählt ist, und das außerdem ein Adreßsignal enthält, das die Endstellen-Einheit (200) kennzeichnet,
   wobei das Mittel (171) zum Übertragen betreibbar ist, um die Anforderungsignale von den Endstellen-Einheiten (200) zu der Hauptstellen-Einrichtung (100) zu übertragen, und
   wobei die Hauptstellen-Einrichtung (100) eine Steuer-Einrichtung (101) zum Empfangen der Anforderungsignale von den Endstellen-Einheiten (200) und zum Verarbeiten der Anforderungsignale zum Anzeigen enthält, welches Anzeigemittel (103) der Hauptstellen-Einrichtung (100) mit der Steuer-Einrichtung (101) zum Anzeigen der verarbeiteten Anforderungsignale, die von der Steuer-Einrichtung (101) empfangen sind, verbunden ist.

**2.** System nach Anspruch 1, bei dem die Hauptstellen-Einrichtung (100) eine Tastatur (102) umfaßt, die mit der Steuer-Einrichtung (101) zum Senden eines Befehls an die Steuer-Einrichtung (101) verbunden ist, um der Steuer-Einrichtung (101) zu befehlen, ihrerseits ein Befehlssignal zur Übertragung zu den Endstellen-Einheiten (200) zu erzeugen, wobei das Befehlssignal in der Lage ist, die Endstellen-Einheiten (200) zu veranlassen, Menü-Daten anzuzeigen, die von der Hauptstellen-Einrichtung (100) gesendet sind.

**3.** System nach Anspruch 1 oder 2, bei dem die Hauptstellen-Einrichtung (100) ein Codiermittel (151, 152) zum digitalen Codieren der Menü-Daten umfaßt und jede Endstellen-Einheit (200) ein Decodiermittel (205) zum Decodieren der codierten Menü-Daten umfaßt.

**4.** System nach Anspruch 3, bei dem die Menü-Daten eine Liste von Speisen und eine Liste von Getränken enthalten.

**5.** System nach Anspruch 3 oder 4, bei dem das Mittel zum Auswählen eine Cursor-Aufwärts-Taste (72) und eine Cursor-Abwärts-Taste (72) zum Auswählen von Menü-Posten aus den angezeigten Menü-Daten sowie eine Eingabetaste (73) zum Senden eines Auswahlsignals durch eine der Cursor-Aufwärts- u. Abwärts-Tasten (72) zu dem Mittel (219) zum Erzeugen eines Anforderungssignals umfaßt.

**6.** System nach Anspruch 3, 4 oder 5, bei dem die Hauptstellen-Einrichtung (100) ein Mittel zum Speichern von Videospiel-Softwaredaten und zum Wiedergewinnen der Videospiel-Softwaredaten zum Übertragen zu den Endstellen-Einheiten (200) umfaßt, wobei die Menü-Daten eine Liste von Videospielen enthalten, die in den Videospiel-Softwaredaten enthalten sind, wobei das Codiermittel (151, 152) in der Lage ist, sowohl die Videospiel-Softwaredaten als auch die Menü-Daten zu codieren, und wobei jede Endstellen-Einheit (200) ein Mittel (209) zum Verarbeiten jedes Videospiels, das durch das Mittel (206) zum Auswählen ausgewählt ist, umfaßt.

**7.** System nach Anspruch 6, bei dem die Menü-Daten eine Liste von Speisen, eine Liste von Getränken und eine Liste von Videospielen enthalten.

**8.** System nach Anspruch 6 oder 7, bei dem die Hauptstellen-Einrichtung (100) Mittel (110 bis 115) zum Wiedergeben von Videosignalen und Mittel (121 bis 129) zum Wiedergeben von Audiosignalen enthält, wobei die Audiosignale durch das Codiermittel (151, 152) codiert werden, wobei die Hauptstellen-Einrichtung (100) eine Modulator-Anordnung (161 bis 167) zum Modulieren der Videosignale, der codierten Menü-Daten und der codierten Audiosignale sowie einen Multiplexer (168) zum Übertragen der modulierten Videosignale, der modulierten codierten Menü-Daten und der modulierten codierten Audiosignale in Multiplex-Technik enthält und wobei jede Endstellen-Einheit (200) ein Mittel (201) zum Empfangen der in Multiplex-Technik übertragenen Signale sowie eine Demodulator-Anordnung (203, 204) zum Demodulieren der Videosignale, der codierten Menü-Daten und der codierten Audiosignale und zum Liefern der demodulierten codierten Audiosignale und der demodulierten codierten Menü-Daten an das Decodiermittel (205) enthält, wobei die demodulierten codierten Audiosignale durch das Decodiermittel (205) decodiert werden und wobei jede Endstellen-Einheit (200) Mittel (65 bis 68) zum Auswählen der Videosignale und der Audiosignale sowie einen Audioausgabeanschluß zum Empfangen der ausgewählten Audiosignale enthält.

**9.** System nach Anspruch 8, bei dem jede Endstellen-Einheit (200) einen Spiel-Anschluß (64), der mit dem Mittel (209) zum Verarbeiten von Videospielen zum Empfangen von Videospiel-Signalen und Leiten der Videospiel-Signale zu dem Mittel (209) zum Verarbeiten von Videospiel-Signalen verbunden ist, sowie eine Spiel-Steuereinrichtung (208) umfaßt, die mit dem Spiel-Anschluß (64) zum Erzeugen der Videospiel-Signale verbindbar ist.

**10.** System nach Anspruch 9, bei dem jede Endstellen-Einheit (200) eine Bedienungsfeldtafel (206) enthält, in der die Menü-Auswahlmittel (71 bis 73), die Mittel (65 bis 68) zum Auswählen von Videosignalen und Audiosignalen, der Audioausgabe-Anschluß und der Spiel-Anschluß (64) vorgesehen sind.

**11.** System nach Anspruch 10, bei dem zumindest eine der Bedienungsfeldtafeln (206) auf der Rückseite eines der Passagiersitze vorgesehen ist.

**12.** System nach einem der vorhergehenden Ansprüche, bei dem das Mittel zum Übertragen ein Kabel (171) ist.

13. System nach Anspruch 12, bei dem ein und dasselbe Kabel (171) zum Übertragen der Anforderungssignale und der Menü-Daten benutzt wird.

14. System nach einem der vorhergehenden Ansprüche, bei dem das Passagier-Beförderungsmittel ein Flugzeug ist.

F I G. 1A

# F I G. 1B

# FIG. 2

EP 0 281 293 B1

FIG. 3

*FIG. 4A*

```
* MAIN MENU *

  MEALS

  DRINKS

  GAMES

  NEXT PAGE

MOVE CURSOR TO
ITEM THEN ENTER
```
61

*FIG. 4C*

*FIG. 4B*

61

```
* DRINKS *

  WINE

  WHISKY

  BEER

  NEXT PAGE

MOVE CURSOR TO
ITEM THEN ENTER
```
61

```
* MEALS *

  STEAK

  CHICKEN

  SEAFOOD

  NEXT PAGE

MOVE CURSOR TO
ITEM THEN ENTER
```
61

EP 0 281 293 B1

FIG. 5

Main Menu

Meals
- Steak — ----
- Chicken — ----
- Sea Food — ----
- X X X X — ----

Drinks
- Wine — ----
- Whisky — ----
- Beer — ----
- O O O O — ----

Games
- O O O X
- O O X O
- X X X O

Souvenirs
- O O O O
- O O △ O — ----
- △ △ △ △ — ----

## F I G. 6A

$F256$

1 Super-Frame (=256 frames )

| St | F255 F256 | | F1 | | F2 | | F3 | | F4 | | ---- | F255 | | F256 | | F1 |

SS     FS     FS           FS     SS

## F I G. 6B

1 frame (=168 bits )

$\frac{1}{32}$ kHz

Frames $\left(\begin{array}{c}F1\\ \wr\\ F256\end{array}\right)$

| SYNC | S B | PCTA | PCTB | PCTC | PCTD | ECC (×4) |

8 bits    4 bits    32 bits    32 bits    32 bits    32 bits    7 bits ×4

## F I G. 6C

Packets $\left(\begin{array}{c}PCTA\\ \wr\\ PCTD\end{array}\right)$

| $M_1$ | $M_2$ | $M_3$ | $M_4$ | ECC |

8 bits   8 bits   8 bits   8 bits   7 bits

32 kHz, 8 bits, Monaural, 4 Channels

EP 0 281 293 B1

# FIG. 7A

SB

| SYNC | B₁ B₂ B₃ B₄ | | PCTA ～ PCTD | ECC |

77 bits × 4 channels

77 frames

CHNA
CHNB
CHNC
CHND

EP 0 281 293 B1

## F I G. 7B

77 bits ( 1 channel )

Channels
(CHNA
$\sim$
CHND)

| WRDA | WRDB | WRDC | WRDD | WRDE | WRDF | WRDG |
|------|------|------|------|------|------|------|

11 bits — 11 bits

## F I G. 7C

Words
(WRDA
$\sim$
WRDG)

1 bit    1 bit 1 bit    8 bits

STRT   DTBT   PRTY   STOP

1 bit    8 bits    1 bit 1 bit

STRT   DTBT   PRTY   STOP

## F I G. 7D

Data bits
(DBTB)x7

| HDER | CMD | ADRS | STTS | CS |
|------|-----|------|------|-----|

1 byte — 1 byte — 2 bytes — 2 bytes — 1 byte

EP 0 281 293 B1

FIG. 8